(19) Europäisches Patentamt
European Patent Office
Office européen des brevets

(11) Publication number : 0 588 330 A2

# (12) EUROPEAN PATENT APPLICATION

(21) Application number : 93114871.2

(22) Date of filing : 15.09.93

(51) Int. Cl.$^5$ : C09K 3/10

(30) Priority : 16.09.92 JP 246509/92

(43) Date of publication of application : 23.03.94 Bulletin 94/12

(84) Designated Contracting States : DE FR GB

(71) Applicant : TOYO SEIKAN KAISHA, LTD.
3-1, Uchisaiwai-cho 1-chome Chiyoda-ku
Tokyo 100 (JP)

(72) Inventor : Kawaguchi, Koichi
Sachigaoka 25, Asahi-Ku
Yokohama-Shi (JP)
Inventor : Maruhashi, Yoshitugu
35-5, Hiyoshihoncho 6-Chome
Kohoku-Ku, Yokohama-Shi (JP)

(74) Representative : Merten, Fritz
Tristanstrasse 5
D-90461 Nürnberg (DE)

## (54) Composition for molding with liquid crystal resin.

(57) An ester resin cap composition is formed by blending 100 parts by weight of at least one kind of liquid crystal polyester resin, and from about 5 to 60 parts by weight of a fine grain solid anti-orientation agent. The mixture is melted and injected into a cooled mold under high shearing conditions to form a molded article. The fine grain solid anti-orientation agent improves the ability of the composition to fill a mold, and inhibits molecular orientation during molding to improve its strength and impact resistance.

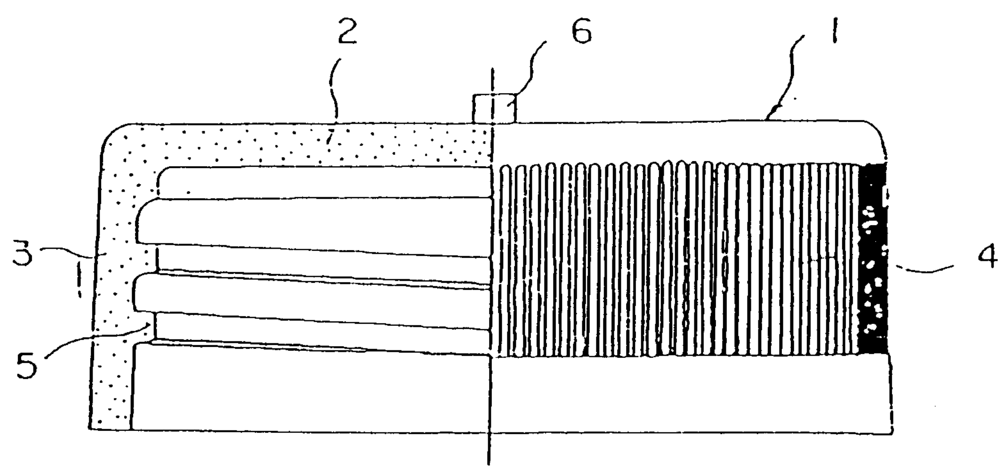


Fig. 1

EP 0 588 330 A2

## BACKGROUND OF THE INVENTION

This invention relates to a liquid crystal polyester resin composition. More specifically, this invention relates to a resin cap made from a liquid crystal polyester resin composition which exhibits improved resistance to steam penetration and superior impact resistance.

Since a resin cap is lightweight, with good impact resistance, there is a great demand for a resin cap for sealing various articles of commerce. Such articles include, but are not limited to sealing bottles and containers containing food, cosmetics, detergents and pharmaceutical products.

Conventional metal or glass material used for making prior art caps are not sufficiently effective in inhibiting steam penetration through the cap wall. In order to solve this problem, a desiccating agent is usually poured into the container to decrease steam penetration through the wall of prior art caps and bodies. However, this practice provides unsatisfactory results. Additionally, the step of adding additional material to the contents of the container, in an effort to reduce steam penetration through the walls of the prior art caps and containers, substantially increases the cost of manufacturing the containers.

In recent years, a liquid crystal polymer has become popular because of the excellent mechanical properties associated with this polymer.

This liquid crystal polymer is divided into two types, "lyotropic" and "thermotropic". A "lyotropic" polymer forms a liquid crystal in the dope state. A typical lyotropic polymer is an aromatic polyamide such as, for example, KEVLAR, produced by I.E. Du Pont de Nemours. A "thermotropic" polymer forms a liquid crystal the product being made from the polymer is in a melted state. A typical thermotropic polymer is an aromatic polyester such as, for example, VECTRA, manufactured by Celanese Plastics Corp.

Liquid crystal materials form a so-called polydomain structure having continuous domains with rigid molecules in well-regulated rows. Upon applying shearing stress to such crystals, the molecules in the crystals orient in a direction of the shearing stress, thus providing excellent strength.

Prior art articles such as film which use such liquid crystals include films wherein stretched moldings are manufactured using liquid crystal polyesters. For example, Japanese Laid-open Patent Publication No. 62-187033 discloses a laminated, stretched molding comprising a layer of thermal liquid crystal polyester made from aromatic dicarbonic acid unit (A), aliphatic diol unit (B) and hydroxy aromatic carbonic acid unit (C), with a layer of polyester containing polyethylene teraphthalate on at least one of its surfaces. The polyethylene teraphthalate is oriented (stretched) in at least one direction.

However, these prior art moldings have numerous disadvantages. Chief among them, is problems encountered in molding three-dimensional structures with this liquid crystal polyesters. Essentially, melt molding these crystals into three dimensional structures, poses substantial problems because these molecules tend to orient in a direction of a shearing stress during the melt molding. A melted product utilizing a liquid crystal polyester has a substantial orientation in the melted fluid, which is different from a melted plastic product. Such a melted product tends to flow in a one-dimensional state.

Therefore, it is difficult to distribute the melted product uniformly in a die orifice or an injection mold to obtain a molding of uniform thickness.

If there is non uniformity in thickness or if a portion of a molding is missing a layer of the liquid crystal polyester, the strength of the molding and/or its gas resistance property is greatly compromised.

Further, if a molding of liquid crystal polyester has a substantial uniaxial orientation resulting from the melted fluid orientation, its strength in the direction of orientation increases, while its strength in a direction perpendicular to the direction of orientation decreases. This results in a molding which is easily destroyed by impact.

## OBJECTS AND SUMMARY OF THE INVENTION

It is an object of the present invention to provide a resin cap using a liquid crystal resin.

It is another object of the present invention to provide a resin cap which reduces uniaxial orientation resulting from the melted fluid orientation produced during molding the liquid crystal polyester. This improves the impact resistance of the resin cap.

Still another object of the present invention is to provide a resin cap which inhibits steam penetration through the wall of the cap body.

Still another object of the present invention is to provide a resin cap with improved heat resistance, and reduced dimensional change during heat sterilization.

In the present invention, a relatively small amount of a fine grain solid anti-orientation agent in combination with a liquid crystal polyester, relaxes the uniaxial molecular orientation. This is supported by experimental data, collected by the inventors.

Even though the liquid crystal polyester resin, containing the fine grain solid anti-orientation agent, exhibits fluidity in a melted state, the liquid crystal polyester is optically anisotropic and shows double refraction in this state. This optical anisotropy is believed to be due to the formation of crystals and/or the orientation of polymer molecules. The anisotropy is particularly evident when the crystal is in a melted state (fluid). This is especially true after a great shearing stress, such as occurs during injection, has acted on it.

Initially, it is thought that the fine grain anti-orientation agent that is used in the present invention remains in a solid state while the liquid crystal polyester is in a melted state. The solid particles of the anti-orientation agent lie between the liquid crystal polyester molecules, thus preventing its molecular orientation.

Additionally, it is thought that since the anti-orientation agent is a fine grain, the anti-orientation agent exhibits Brownian movement similar to that seen in the dispersion of colloidal particles in water. This is especially true when a high shearing stress is applied. It is thought that this feature inhibits the molecular orientation.

Briefly stated, the present invention provides an ester resin cap composition formed by blending 100 parts by weight of at least one kind of liquid crystal polyester resin, and from about 5 to 60 parts by weight of a fine grain solid anti-orientation agent. The mixture is melted and injected into a cooled mold under high shearing conditions to form a molded article. The fine grain solid anti-orientation agent improves the ability of the composition to fill a mold, and inhibits molecular orientation during molding to improve its strength and impact resistance.

According to an embodiment of the invention, there is provided an ester resin composition, comprising: at least one liquid crystal resin, at least one anti-orientation agent, and the agent being present in a ratio of from about 5 to 60 parts by weight to about 100 parts by weight of the liquid crystal resin.

According to a feature of the invention, there is provided an ester resin composition, comprising: at least one liquid crystal resin, at least one anti-orientation agent, the agent being present in a ratio of from about 5 to 60 parts by weight to about 100 parts by weight of the liquid crystal resin, and the at least one anti-orientation resin being of a type which remains solid at a molding temperature of the at least one liquid crystal resin.

According to a further feature of the invention, there is provided a method for producing a resin composition, comprising: blending at least one liquid crystal resin with at least one anti-orientation agent to form a mixture, the agent being present in a ratio ranging from about 5 to 60 parts by weight to about 100 parts by weight of the liquid crystal resin, melting the mixture, and injecting the mixture into a cooled mold.

When the amount of the fine grain solid anti-orientation agent is lower than 5 per 100 parts of liquid crystal resin, its effect in inhibiting the molecular orientation of the melted fluid is negligible. When the amount is greater than the 60 per 100 parts of liquid crystal resin, the shearing stress required to injection mold a product with the resin composition is too great.

As noted previously, the present invention permits molding a resin cap which fills a mold pattern completely. Additionally, the resin cap of the present invention has high rigidity due to the presence of the liquid crystal polyester and has excellent resistance to steam penetration. The combination of these properties results is a resin cap which can effectively seal containers with improved accuracy and imparts excellent steam penetration and heat resistance to the cap and the containers. The resin cap of the present invention also shows improved dimensional stability during heat sterilization.

The above, and other objects, features and advantages of the present invention will become apparent from the following description read in conjunction with the accompanying drawing, in which like numerals designate the same elements.

## BRIEF DESCRIPTION OF DRAWING

FIG. 1 is a cross section of a resin cap according to an embodiment of the present invention.

## DETAILED DESCRIPTION OF THE PREFERRED EMBODIMENT

Referring to Fig. 1, a cap 1 has a top plate part (panel) 2 with a cylindrical skirt 3 integrally formed therewith. A fine convex and concave part (gnarling channel) 4 on the periphery of skirt 3 to facilitate holding the cap. A screw thread 5 is formed on the inner surface of convex and concave part 4 to fasten and seal hermetically an opening of a container (not shown). A small projection 6 at the center of the outer surface of top plate 2, is an artifact of a gate of an injection mold.

According to a feature of the present invention, the resin cap 1 is manufactured by melt-molding a resin composition comprising a liquid crystal polyester containing from about 5 to about 60 parts by weight of a fine grain solid anti-orientation agent per 100 parts by weight of liquid crystal polyester.

The liquid crystal polyester resin for use as a thermotropic substance in the present invention may include a polyester produced from a mixture of a poly-condensation of aromatic dicarbonic acid and an aromatic diol.

It may further include a polyester obtained from poly-condensation of aromatic hydroxy carbonic acid and/or a co-polyester obtained from the co-polymerization of the foregoing two polyesters. It may also include a co-polyester derived from these polyesters, together with polyethylene teraphthalate.

The ratio of the divalent aromatic radical per divalent hydrocarbon radical, is preferably within the range of 50 to 100% for the liquid crystal resin used in the present invention, and is 50% for polyethylene teraphthalate.

Preferred examples of liquid crystal polyester are as follows:

(1) A polyester comprising the repetitive unit represented by the formula given below, for example, VECTRA from Celanese Plastics Corp.

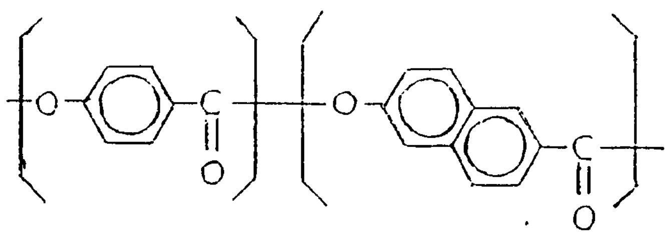

(2) A polyester comprising the repetitive unit represented by the formula given below, for example, XYDAR of Datoco:

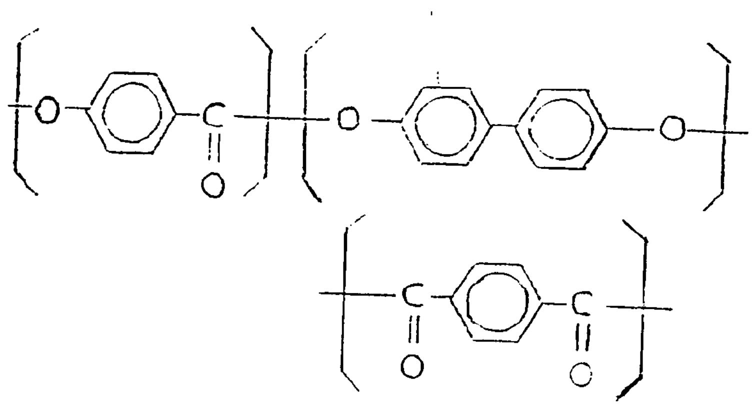

(3) A polyphenyl hydroquinon teraphthalate comprising the repetitive unit represented by the formula given below:

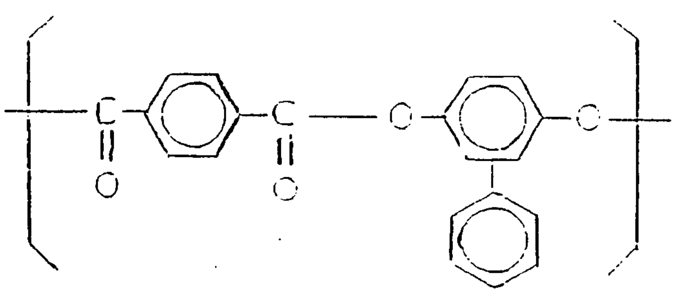

(4) A co-polymer of PHB/PET comprising the repetitive unit represented by the formula given below:

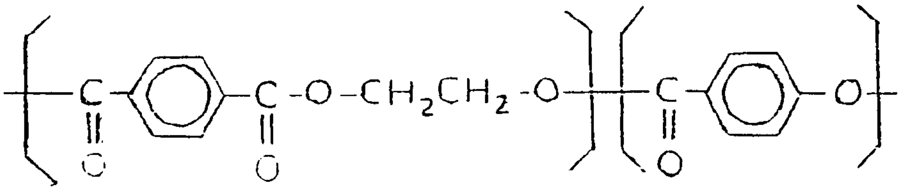

The liquid crystal polyester for use in the present invention is not limited to the foregoing examples, but should be construed as including any other suitable material.

The liquid crystal resin for use in the present invention should have sufficient molecular weight to form a film, and preferably should be thermally moldable at 200 to 400°C.

It is preferable that the fine grain anti-orientation agent for use in the present invention be a solid fine grain composition at the time of melt molding of the liquid crystal polyester.

Following are examples of fine grain solid anti-orientation agent that can be used:

Inorganic white pigment including rutile type or anatase type of titanium dioxide, zinc white, or gloss white;

A white extender including barite, precipitated barium sulfate, calcium carbonate, gypsum, precipitated silica, aerosil, talc, burned or non-burned clay, barium carbonate, alumina white, synthesized or natural mica, synthesized calcium silicate, or magnesium carbonate;

A black pigment including carbon black or magnetite;

A red pigment including Indian red;

A yellow red including sienna;

A blue pigment including ultramarine blue or cobalt blue; and

Other pigments.

The pigment or filler mentioned above is in powder form and is amorphous. Alternatively, a fixed form of inorganic grain can be suitably used in the present invention. The term "fixed form of inorganic grain" means that the shape of the grain is uniform electro-microscopically, for example, including micro-globular silica; micro-globular alumina; micro-globular silica alumina; silica micro balloon; zeolite of A-type, X-type, Y-type or P-type; noncrystalline silica obtained from non crystallization of the foregoing substances leaving their residues, silica alumina, or silicate or aluminum silicate.

In the present invention, it is preferable to use only the liquid crystal resin, but if desired, it is possible to blend another thermoplastic resin at no more than 50 parts by weight per 100 parts by weight of liquid crystal resin.

A thermoplastic resin for use in combination with the liquid crystal resin is usually a thermoplastic resin used for melt molding into a product such as a cap. This thermoplastic resin is preferably a thermoplastic polyester derived from an aromatic dicarbonic acid such as polyethylene teraphthalate, polybutylene teraphthalate or polyethylene naplithalate and aliphatic diol; a polyarylate derived from aromatic dicarbonic acid and bisphenols such as bisphenol A; a polycarbonate such as 2,2-bis (4-hydroxyphenyl) propane carbone; a polyamide such as nylon 6, nylon 66, nylon 46, polymethaxylene adipamide or polyhexamethylene teraphthalamide; an ultrahigh molecular weight olefin resin such as ultrahigh molecular weight polypropylene, propylene-ethylene copolymer or poly 4-methyl pentene-1; or a product obtained from blending two or more of these substances. Polyethylene teraphthalate is the most preferable of the foregoing substances.

According to a feature of the present invention, a blend of liquid crystal resin and an anti-orientation agent is fed into a hopper of an injection molding machine. This blend may be a dry or melted blend of liquid crystal resin and anti-orientation agent. For the dry blend, various types of blenders such as ribbon blender, conical blender or Henschel mixer can be used. For the melted blend, uniaxial or biaxial extruder, kneader, Banbury mixer or roll can be used.

In molding the resin cap, the blend is melted and injected into a cooled injection mold under a high shearing condition. An injection molding machine equipped with an injection plunger or screw is used. The injection molding machine injects the blend into the injection mold through its nozzle, sprue or gate.

At that time, the fluid orientation of the liquid crystal resin is relaxed to permit the resin to flow smoothly into the cavity of the injection mold, fulling the mold without voids or thin portions. The molded resin is then cooled and allowed to solidify to the shape and dimensions of the mold, which finally yields the resin cap of this invention. An injection mold with a cavity corresponding to the shape of cap is used, but even a one-gate type of injection mold can produces the resin cap exhibiting a high dimensional accuracy.

The injection mold is opened to remove the cap. The resulting resin cap can then be supplied to the user of goods directly for sealing a container hermetically or to a manufacturer of containers for sealing containers.

The molded resin cap and an injection can also be heat-treated.

For the cap of the present invention, various changes and modifications may be effected without departing from the spirit of the invention.

This invention is illustrated in more detail by reference to the examples described hereinafter. The methods for determining and evaluating container materials and characteristics described in the embodiments and comparative examples are as follows:

(a) Impact test

A resin cap molded by injection molding was placed on a surface plate that was kept horizontally, by turning the top plate (panel) of the cap upward. A nominal 2 1/2 steel ball belonging to the steel ball (ordinary class) specified under JIS (Steel ball for ball bearing) was dropped toward the center of the top plate (panel) of the cap. The impact resistance is expressed by the height of fall causing breakage. The height of fall was determined to be the distance of the lower end of steel ball to the surface of the resin cap on which the steel ball falls.

(b) Moisture penetration test

A commercial glass container was washed and dried. Heat was discharged from the container in a desiccator containing silica gel. 70% by volume of the glass container was filled with dried calcium chloride** anhydride. The glass container was stoppered by a resin cap molded by injection molding through the liner of the cap.

The glass container was then kept in a desk thermo-hygrostat, which was maintained at a temperature of 25°C and a relative humidity of 75% RH. This was done to determine a change in the gross weight of the glass bottle over a period of time. Using an increment of weight as an amount of water which penetrated through the resin cap, a moisture penetration amount was calculated from a change in the amount of water in the glass container.

(c) Measurement of dimensions

The dimensions of the resin cap which was molded by injection molding were measured by a micrometer. After heat sterilization at 120°C in an autoclave for 30 minutes, the dimensions of the cap were measured. The difference between measured dimensions and mold ones was determined.

Although embodiments of the present invention are described below, the instant invention is not limited to these embodiments.

EMBODIMENT 1

In this embodiment, a resin cap was molded by an injection molding machine, using a liquid crystal polyester and a talc resin comprising 20 parts by weight of a fine grain solid anti-orientation agent per 100 parts by weight of the liquid crystal polyester. The shape of the resin cap is illustrated in Fig. 1, which has a diameter of 36 mm. The injection molding was performed at a barrel temperature of 270 to 310°C and a nozzle temperature of 285 to 295°C. Using the resin cap so obtained, an impact test was conducted to determine the height of fall. The results are shown in Table 1. The amount of water which penetrated into the container was also determined. The results are shown in Table 2. The dimensions of the molded resin cap were also determined. The results are shown in Table 3 and Table 4.

COMPARATIVE EXAMPLE 1

In this example, a resin cap was molded by means of injection molding, using a liquid crystal polyester, in the same way as in Embodiment 1. The height of fall was determined, using the obtained resin cap. The results are shown in Table 1.

COMPARATIVE EXAMPLE 2

Comparison example 2 is a resin cap which was molded by an injection molding, in a way similar to Embodiment 1 except that the liquid crystal polyester and talc resin of embodiment 1 is replaced by a high density polyethylene resin. The amount penetration was determined, using the obtained cap. The results are shown in Table 2. Further, the dimensions of the molded 3 cap and those of the heated cap were determined. The results are shown in Table 3 and Table 4.

Table 1

| Example No. | Resin | Height of fall(mm) |
|---|---|---|
| Embodiment 1 | LCP (inc 20% talc) | 238 |
| Comparative Example 1 | LCP single | 175 |

Table 2

| Example No. | Resin | Amount of transmitted water (mg/day. cap. at 25oC, 75%RH |
|---|---|---|
| Embodiment 1 | LCP (inc 20% talc) | 0.144 |
| Comparative Example 2 | HDPE | 0.214 |

Table 3

| Example No. | Dimensions (mm) | | | Difference from mold dimensions (mm) | | |
|---|---|---|---|---|---|---|
| | Diameter | Inside diameter | Height | Diameter | Indside diameter | Height |
| Embodiment 1 | 36.14 | 32.10 | 12.56 | 0.14 | 0.10 | 0.06 |
| Comparative example 2 | 35.07 | 31.19 | 12.37 | 0.93 | 0.81 | 0.13 |
| Mold dimensions | 36.00 | 32.00 | 12.50 | - | - | - |

Table 4

| Example No. | Dimensions (mm) | | | Difference from mold dimensions (mm) | | |
|---|---|---|---|---|---|---|
| | Diameter | Inside diameter | Height | Diameter | Indside diameter | Height |
| Embodiment 1 | 35.88 | 32.01 | 12.56 | 0.12 | 0.01 | 0.06 |
| Comparative example 2 | 34.64 | 31.25 | 12.40 | 1.36 | 0.75 | 0.10 |
| Mold dimensions | 36.00 | 32.00 | 12.50 | - | - | - |

According to a feature of the present invention, a method of manufacture of the resin cap is provided, which comprises the steps of melt-molding a resin composition comprising a liquid crystal polyester and 5 to 60 parts by weight of a fine grain solid anti orientation agent per 100 parts by weight of the liquid crystal polyester, whereby a marked uniaxial orientation, due to a melted fluid orientation produced at the time of molding the liquid crystal polyester, is effectively relaxed so as to increase the impact resistance of the resin cap.

This feature also increases the resin caps ability to inhibit steam penetration along with improving its heat resistance and dimensional accuracy during heat sterilization. Thus, many advantages can be obtained from the present invention.

Having described preferred embodiments of the invention with reference to the accompanying drawing, it is to be understood that the invention is not limited to those precise embodiments, and that various changes

and modifications may be effected therein by one skilled in the art without departing from the scope or spirit of the invention as defined in the appended claims.

## Claims

1. An ester resin composition, comprising:
   at least one liquid crystal resin;
   at least one anti-orientation agent; and
   said agent being present in a ratio of from about 5 to 60 parts by weight to about 100 parts by weight of said liquid crystal resin.

2. The composition according to claim 1, wherein:
   said anti-orientation agent is present in a ratio of from about 10 to 50 parts by weight to about 100 parts by weight of said liquid crystal resin.

3. The composition according to claim 1, wherein:
   said anti-orientation agent is a fine grain solid.

4. The composition according to claim 1, wherein:
   said liquid crystal resin is a polyester.

5. The composition according to claim 1, wherein said at least one kind of liquid crystal resin is at least one ester selected from the group consisting of:
   a first polyester produced from the poly-condensation of aromatic dicarbonic acid and aromatic diol;
   a second polyester produced from the poly-condensation of aromatic hydroxy carbonic acid;
   a first co-polyester produced from the copolymerization of said first and second polyester;
   a second co-polyester produced from at least one of said first and second polyester and said first co-polyester; and
   polyethylene teraphthalate.

6. The composition according to claim 5, wherein:
   a ratio of a divalent aromatic radical per divalent hydrocarbon radical in a repetitive unit of said at least one ester ranges from about 50 to 100%.

7. The composition according to claim 6, wherein:
   said ester is polyethylene teraphthalate;
   said ratio of a divalent aromatic radical per divalent hydrocarbon radical in a repetitive unit of said at least one ester is about 50%.

8. The composition according to claim 1, wherein:
   said liquid resin has a molecular weight sufficient to form a film.

9. The composition according to claim 3, wherein:
   said anti-orientation agent is a pigment.

10. The composition according to claim 9, wherein said pigment is selected from the group consisting of:
   a rutile type titanium oxide;
   an anatase type of titanium dioxide;
   zinc white;
   gloss white;
   barite;
   precipitated barium sulfate;
   calcium carbonate;
   gypsum;
   precipitated silica;
   aerosil;
   talc;
   burned clay;

non-burned clay;
barium carbonate;
alumina white;
synthesized mica;
natural mica;
synthesized calcium silicate;
magnesium carbonate;
carbon black;
magnetite;
indian red;
sienna;
ultramarine blue; and
cobalt blue.

**11.** The composition according to claim 3, wherein:
said anti-orientation agent is amorphous.

**12.** The composition according to claim 3, wherein:
said anti-orientation agent is in a fixed form.

**13.** The composition according to claim 12, wherein said fixed form includes at least one of the following:
micro-globular silica;
micro-globular alumina;
micro-globular silica alumina;
silica microballoon;
zeolite of A-type;
zeolite of X-type;
zeolite of Y-type;
zeolite of P-type;
noncrystalline silicate silica alumina; and
silicate and alumina silicate.

**14.** The composition according to claim 1, further including a thermoplastic resin.

**15.** The composition according to claim 14, wherein said thermoplastic resin being present in an amount not exceeding 50 parts by weight of said thermoplastic resin to about 100 parts by weight of said liquid crystal resin.

**16.** The composition according to claim 14, wherein said thermoplastic resin is at least one selected from the group consisting of:
a thermoplastic polyester derived from an aromatic dicarbonic acid such as polyethylene teraphthalate, polybutylene teraphthalate and polyethylene naphthalate and aliphatic diol;
a polyarylate derived from aromatic dicarbonic acid and bisphenols such as bisphenol A;
a polycarbonate;
a polyamide;
an ultrahigh molecular weight olefin resin.

**17.** The composition according to claim 16, wherein said polycarbonate is 2,2-bis(4-hydroxyphenyl) propane carbone.

**18.** The composition according to claim 16 wherein said polyamide at least one polyamide selected from the group consisting of nylon 6, nylon 66, nylon 46, polymethaxylene adipamide and polyhexamethylene teraphthalamide.

**19.** The composition of claim 16 wherein said ultrahigh molecular weight olefin resin is at least one of ultrahigh molecular weight polypropylene, propylene-ethylene copolymer and Poly 4-methyl pentene-1.

**20.** The composition according to claim 14, wherein:
said thermoplastic resin is derived from polyethylene teraphthalate.

**21.** An ester resin composition, comprising:
at least one liquid crystal resin;
at least one anti-orientation agent;
said agent being present in a ratio of from about 5 to 60 parts by weight to about 100 parts by weight of said liquid crystal resin; and
said at least one anti-orientation resin being of a type which remains solid at a molding temperature of said at least one liquid crystal resin.

**22.** A method for producing a resin composition, comprising:
blending at least one liquid crystal resin with at least one anti-orientation agent to form a mixture;
said agent being present in a ratio ranging from about 5 to 60 parts by weight to about 100 parts by weight of said liquid crystal resin;
melting said mixture; and
injecting said mixture into a cooled mold.

**23.** The method according to claim 22, wherein:
said anti-orientation agent is a fine grain solid.

**24.** The method according to claim 22, wherein:
said liquid crystal resin is a polyester.

**25.** The method according to claim 22, wherein said at least one kind of liquid crystal resin is at least one ester selected from the group consisting of:
a first polyester produced from the poly-condensation of aromatic dicarbonic acid and aromatic diol;
a second polyester produced from the poly-condensation of aromatic hydroxy carbonic acid;
a first co-polyester produced from the copolymerization of said first and second polyester;
a second co-polyester produced from at least one of said first and second polyester and said first co-polyester; and
polyethylene teraphthalate.

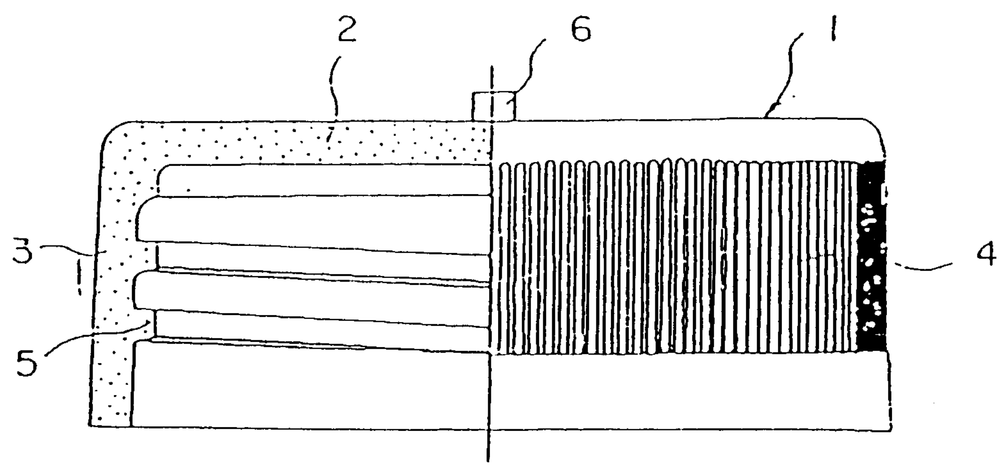


Fig. 1